# EUROPEAN PATENT SPECIFICATION

(11) **EP 2 519 049 B1**
(45) Date of publication and mention of the grant of the patent: **07.08.2019**
(21) Application number: 10791438.4
(22) Date of filing: 04.06.2010
(51) Int. Cl.: H04L 1/00

(54) **METHOD AND COMMUNICATION SYSTEM FOR IMPLEMENTING ADJUSTMENT OF UPLINK ADAPTIVE CODING MODE**
VERFAHREN UND KOMMUNIKATIONSSYSTEM ZUR IMPLEMENTIERUNG DER ANPASSUNG EINES ADAPTIVEN AUFWÄRTSVERBINDUNGS-CODIERUNGSMODUS
PROCÉDÉ ET SYSTÈME DE COMMUNICATION PERMETTANT DE METTRE EN OEUVRE UN RÉGLAGE DU MODE DE CODAGE ADAPTATIF EN LIAISON MONTANTE

(30) Priority: 22.12.2009 CN 200910254391
(43) Date of publication of application: 31.10.2012
(73) Proprietor: ZTE Corporation, Shenzhen, Guangdong 518057 (CN)
(72) Inventor: HE, Jianfeng, Shenzhen Guangdong 518057 (CN); LI, Shu, Shenzhen Guangdong 518057 (CN); ZHU, Suyu, Shenzhen Guangdong 518057 (CN)
(74) Representative: Novagraaf Technologies
(86) International application number: PCT/CN2010/073587
(87) International publication number: WO 2010/148932

(56) References cited:
- EP-A1- 1 372 290
- CN-A- 1 350 404
- CN-A- 101 047 473
- CN-A- 101 399 630
- US-A1- 2003 202 574

## Description

### Technical Field

The present invention relates to the field of communication, and in particular, to a method for implementing adjustment of an uplink adaptive coding scheme, a communication system and a server.

### Background of the Related Art

With the rapid development of communication industry, the number of users of a Global System for Mobile communication (GSM) network increases fast, and the requirements for processing abilities of network devices are also enhanced gradually. An important index of the processing ability of the network device is an upload rate, and the key factor affecting the upload rate is whether the coding scheme adopted by a terminal (e.g., a mobile phone) in the current wireless environment is appropriate. If the coding scheme is too high, then data of wireless signals will be lost largely; and if the coding scheme is too low, then the upload rate will be low. An Enhanced Data Rate for GSM Evolution (EDGE) has nine coding schemes in total: EDGE Module Coding Scheme (MCS) 1 ∼ MCS9, wherein MCS1 has the lowest requirement on wireless quality, but its rate is also the lowest; while the rate of MCS9 is the highest, but its requirement on wireless quality is also the highest. Table 1 lists the theoretical rate of each coding scheme of EDGE.

**Table 1 Theoretical Rate of Each Coding Scheme of EDGE**

| Coding Scheme | Number of Block Bytes | Adjusting Mode | Rate | 4-Timeslot Rate |
|---|---|---|---|---|
| MCS1 | 22 bytes | GMSK | 8.8kbps | 35.2kbs |
| MCS2 | 28 bytes | GMSK | 11.2kbps | 44.8kbps |
| MCS3 | 37 bytes | GMSK | 14.8kbps | 59.2kbps |
| MCS4 | 44 bytes | GMSK | 17.6kbps | 70.4kbps |
| MCS5 | 56 bytes | 8PSK | 22.4kbps | 89.6kbps |
| MCS6 | 74 bytes | 8PSK | 29.6kbps | 118.4kbps |
| MCS7 | 2 × 56 bytes | 8PSK | 44.8kbps | 179.2kbps |
| MCS8 | 2 × 68 bytes | 8PSK | 54.4kbps | 217.6kbps |
| MCS9 | 2 × 74 bytes | 8PSK | 59.2kbps | 236.8kbps |

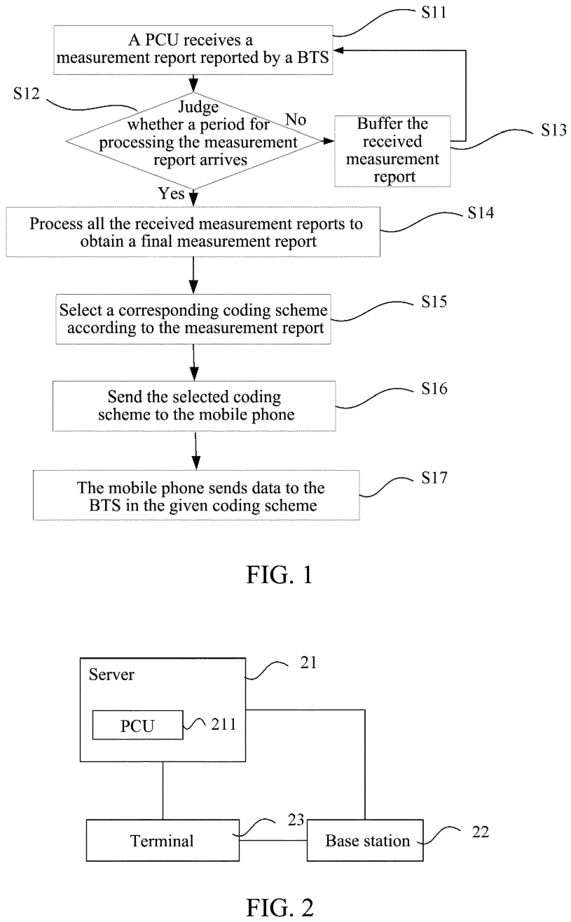

FIG. 1 illustrates a flow of a method for adjusting a coding scheme in the prior art. As shown in FIG. 1, the flow comprises the following steps:
S11, a Package Control Unit (PCU) receives a measurement report reported by a Base Transceiver Station (BTS);
   the measurement report includes:
   GMSK_MEAN_BEP: a mean bit error rate on an uplink and downlink temporary block flow (TBF) of Guassian Minimum Shift Keying (GMSK);
   8PSK_MEAN_BEP: a mean bit error rate on the TBF of 8 Phase digital modulation scheme (8PSK);
   GMSK_CV_BEP: a change rate of a bit error probability on the TBF of GMSK;
   8PSK_CV_BEP: a change rate of a bit error probability on the TBF of 8PSK;
   wherein, GMSK is a modulation mode of a existing GSM network, 8PSK is a 8 phase digital modulation scheme, and TBF is the uplink and downlink temporary block flow.
S12, the PCU judges whether a period for processing the measurement report arrives, if the period for processing the measurement report does not arrive, step S13 is executed; and if the period for processing the measurement report does arrive, step S14 is executed.
S13, the PCU buffers the received measurement report, and then return to step S11.
S14, the PCU processes all received measurement reports to obtain a final measurement report.
S15, the PCU selects a corresponding coding scheme according to the measurement report.
S16, the PCU sends the selected coding scheme to the mobile phone.
S17, the mobile phone sends data to the BTS in the given coding scheme.

There are several measurement reports in a measurement report period, the value of the final measurement report is generally obtained according to a formula provided by the protocol, and then the corresponding coding scheme is selected according to a recommendation table provided by the protocol. Table 2 shows a coding scheme adjustment table recommended by the protocol.

**Table 2 Coding Scheme Adjustment Table Recommended by the Protocol**

| | | 8PSK_CV_BEP | | | | | | | |
|---|---|---|---|---|---|---|---|---|---|
| | | 0 | 1 | 2 | 3 | 4 | 5 | 6 | 7 |
| 8 PSK MEAN BEP | 0 | MCS-5 | MCS-5 | MCS-5 | MCS-5 | MCS-5 | MCS-5 | MCS-5 | MCS-5 |
| | 1 | MCS-5 | MCS-5 | MCS-5 | MCS-5 | MCS-5 | MCS-5 | MCS-5 | MCS-5 |
| | 2 | MCS-5 | MCS-5 | MCS-5 | MCS-5 | MCS-5 | MCS-5 | MCS-5 | MCS-5 |
| | 3 | MCS-5 | MCS-5 | MCS-5 | MCS-5 | MCS-5 | MCS-5 | MCS-5 | MCS-5 |
| | 4 | MCS-5 | MCS-5 | MCS-5 | MCS-5 | MCS-5 | MCS-5 | MCS-5 | MCS-5 |
| | 5 | MCS-5 | MCS-5 | MCS-5 | MCS-5 | MCS-5 | MCS-5 | MCS-5 | MCS-6 |
| | 6 | MCS-5 | MCS-5 | MCS-5 | MCS-5 | MCS-5 | MCS-5 | MCS-6 | MCS-6 |
| | 7 | MCS-5 | MCS-5 | MCS-5 | MCS-5 | MCS-5 | MCS-6 | MCS-6 | MCS-6 |
| | 8 | MCS-5 | MCS-5 | MCS-5 | MCS-5 | MCS-6 | MCS-6 | MCS-6 | MCS-6 |
| | 9 | MCS-5 | MCS-5 | MCS-5 | MCS-6 | MCS-6 | MCS-6 | MCS-6 | MCS-6 |
| | 10 | MCS-5 | MCS-5 | MCS-6 | MCS-6 | MCS-6 | MCS-6 | MCS-6 | MCS-7 |
| | 11 | MCS-6 | MCS-6 | MCS-6 | MCS-6 | MCS-6 | MCS-6 | MCS-7 | MCS-7 |
| | 12 | MCS-6 | MCS-6 | MCS-6 | MCS-6 | MCS-6 | MCS-7 | MCS-7 | MCS-7 |
| | 13 | MCS-6 | MCS-6 | MCS-6 | MCS-6 | MCS-7 | MCS-7 | MCS-7 | MCS-7 |
| | 14 | MCS-6 | MCS-6 | MCS-7 | MCS-7 | MCS-7 | MCS-7 | MCS-7 | MCS-7 |
| | 15 | MCS-7 | MCS-7 | MCS-7 | MCS-7 | MCS-7 | MCS-7 | MCS-7 | MCS-7 |
| | 16 | MCS-7 | MCS-7 | MCS-7 | MCS-7 | MCS-7 | MCS-7 | MCS-7 | MCS-7 |
| | 17 | MCS-7 | MCS-7 | MCS-7 | MCS-7 | MCS-7 | MCS-7 | MCS-7 | MCS-7 |
| | 18 | MCS-7 | MCS-7 | MCS-7 | MCS-7 | MCS-7 | MCS-7 | MCS-7 | MCS-7 |
| | 19 | MCS-7 | MCS-7 | MCS-7 | MCS-7 | MCS-7 | MCS-7 | MCS-7 | MCS-7 |
| | 20 | MCS-7 | MCS-7 | MCS-7 | MCS-7 | MCS-7 | MCS-7 | MCS-7 | MCS-7 |
| | 21 | MCS-7 | MCS-7 | MCS-8 | MCS-8 | MCS-8 | MCS-8 | MCS-8 | MCS-8 |
| | 22 | MCS-8 | MCS-8 | MCS-8 | MCS-8 | MCS-8 | MCS-8 | MCS-8 | MCS-8 |
| | 23 | MCS-8 | MCS-8 | MCS-8 | MCS-8 | MCS-8 | MCS-8 | MCS-8 | MCS-8 |
| | 24 | MCS-8 | MCS-8 | MCS-8 | MCS-8 | MCS-8 | MCS-8 | MCS-8 | MCS-8 |
| | 25 | MCS-8 | MCS-8 | MCS-8 | MCS-8 | MCS-8 | MCS-8 | MCS-8 | MCS-8 |
| | 26 | MCS-8 | MCS-8 | MCS-8 | MCS-8 | MCS-8 | MCS-8 | MCS-8 | MCS-8 |
| | 27 | MCS-8 | MCS-8 | MCS-8 | MCS-8 | MCS-8 | MCS-8 | MCS-8 | MCS-8 |
| | 28 | MCS-9 | MCS-9 | MCS-9 | MCS-9 | MCS-9 | MCS-9 | MCS-9 | MCS-9 |
| | 29 | MCS-9 | MCS-9 | MCS-9 | MCS-9 | MCS-9 | MCS-9 | MCS-9 | MCS-9 |
| | 30 | MCS-9 | MCS-9 | MCS-9 | MCS-9 | MCS-9 | MCS-9 | MCS-9 | MCS-9 |
| | 31 | MCS-9 | MCS-9 | MCS-9 | MCS-9 | MCS-9 | MCS-9 | MCS-9 | MCS-9 |

However, in practical applications, due to difference between hardwares, and algorithms for calculating the mean bit error rate (MEAN_BEP) on the uplink and downlink temporary block flow and the change rate of the bit error probability (CV_BEP) on the uplink and downlink temporary block flow existing in various factories, there is a problem that the measurement reports reported by the devices of different factories are not consistent; in addition, there is also a problem that the coding scheme continuously changes under a fixed wireless quality, which will affect the upload rate of the packet service due to inability to fix on a suitable coding scheme stably.

The documents EP1372290A1 and US2003202574A1 have disclosed the related art of the present invention.

### Summary of the Invention

The technical problem to be solved in the present invention is to provide a method for implementing adjustment of an uplink adaptive coding scheme, a server and a communication system to fix the coding scheme as a coding scheme suitable to the current wireless quality as possible according to measurement reports.

The present invention provides a method for implementing adjustment of an uplink adaptive coding scheme according to independent method claim, and a server according to independent apparatus claim.

Also provided is a method for implementing adjustment of an uplink adaptive coding scheme, comprising the following steps of:
a server measuring a coding scheme with a highest transmission rate under different wireless qualities respectively; collecting measurement report samples reported by a base station under the different wireless qualities and corresponding coding schemes with the highest transmission rate; analyzing a distribution of the measurement report samples, and making a corresponding coding scheme adjustment table for the corresponding coding scheme with the highest transmission rate under the different wireless qualities respectively based on an analysis result; and
when receiving the measurement report reported by the base station, selecting an appropriate coding scheme in the coding scheme adjustment table corresponding to a current coding scheme based on the measurement report, and then sending the selected coding scheme to a terminal.

The above method has the following characteristic: said step of analyzing a distribution of the measurement report samples comprises:
analyzing a distribution of a mean error rate, MeanBep, value on an uplink and downlink temporary block flow and a change rate of bit error probability, CvBep, value on an uplink and downlink temporary block flow in the collected measurement report sample.

The above method has the following characteristic: said step of making a corresponding coding scheme adjustment table for the corresponding coding scheme with the highest transmission rate under the different wireless qualities respectively based on an analysis result comprises:
making the corresponding coding scheme adjustment table by associating an interval of the MeanBep values and an interval of the CvBep values whose distribution of the measurement report samples is larger than a predetermined ratio with the coding scheme with the highest transmission rate.

The above method has the following characteristic:
the coding scheme adjustment table further comprises: information of an upper level of coding scheme of the coding scheme with the highest transmission rate and information of next two lower levels of coding schemes of the coding scheme with the highest transmission rate.

The above method has the following characteristic: the predetermined ratio is more than 70%.

The above method has the following characteristic: said step of collecting measurement report samples reported by a base station comprises: collecting more than 3000 measurement report samples reported by the base station.

Also provided is a server, comprising a packet control unit, wherein, the packet control unit comprises:
a table making sub-unit, configured to measure a coding scheme with a highest transmission rate under different wireless qualities respectively, collect measurement report samples reported by a base station under the different wireless qualities and corresponding coding schemes with the highest transmission rate, analyze a distribution of the measurement report samples, and make a corresponding coding scheme adjustment table for the corresponding coding scheme with the highest transmission rate under the different wireless qualities respectively based on an analysis result; and
a selecting sub-unit, configured to select an appropriate coding scheme in the coding scheme adjustment table corresponding to a current coding scheme based on the measurement report when receiving the measurement report reported by the base station, and then send the selected coding scheme to a terminal.

The above server has the following characteristict:
the table making sub-unit is configured to analyze a distribution of a mean error rate, MeanBep, value on an uplink and downlink temporary block flow and a change rate of bit error probability, CvBep, value on an uplink and downlink temporary block flow in the collected measurement report sample.

The above server has the following characteristic:
the table making sub-unit is configured to make the corresponding coding scheme adjustment table by associating an interval of the MeanBep values and an interval of the CvBep values whose distribution of the measurement report samples is larger than a predetermined ratio with the coding scheme with the highest transmission rate.

The above server has the following characteristic:
the coding scheme adjustment table further comprises: information of an upper level of coding scheme of the coding scheme with the highest transmission rate and information of next two lower levels of coding schemes of the coding scheme with the highest transmission rate.

Also provided is a communication system, comprising a base station, a terminal and a server, wherein,
the server is configured to measure a coding scheme with a highest transmission rate under different wireless qualities respectively, collect measurement report samples reported by a base station under the different wireless qualities and corresponding coding schemes with the highest transmission rate, analyze a distribution of the measurement report samples, and make a corresponding coding scheme adjustment table for the corresponding coding scheme with the highest transmission rate under the different wireless qualities respectively based on an analysis result; and, when receiving the measurement report reported by the base station, select an appropriate coding scheme in the coding scheme adjustment table corresponding to a current coding scheme based on the measurement report, and then send the selected coding scheme to a terminal;
the terminal is configured to send data to the base station according to the coding scheme after receiving the coding scheme issued by the server.

The above communication system has the following characteristic:
the server is configured to analyze a distribution of a mean error rate, MeanBep, value on an uplink and downlink temporary block flow and a change rate of bit error probability, CvBep, value on an uplink and downlink temporary block flow in the collected measurement report sample.

The above communication system has the following characteristic:
the server is configured to make the corresponding coding scheme adjustment table by associating an interval of the MeanBep values and an interval of the CvBep values whose distribution of the measurement report samples is larger than a predetermined ratio with the coding scheme with the highest transmission rate.

The above communication system has the following characteristic:
the coding scheme adjustment table further comprises: information of an upper level of coding scheme of the coding scheme with the highest transmission rate and information of next two lower levels of coding schemes of the coding scheme with the highest transmission rate.

With the above technical scheme, the transmission rate of the data service of packet service under adaptation of the links is increased. The main concept is that each coding scheme corresponds to one coding scheme adjustment table based on the measurement reports; and if the current wireless quality is suitable to the coding scheme, then this coding scheme is kept as much as possible, and if a higher-level coding scheme can be adopted under the current wireless quality, then the coding scheme is adjusted to the higher-level coding scheme. Meanwhile, unlike other patents, it is not necessary to add various limitation conditions and complicated algorithms in the present invention to prevent the coding scheme from changing too frequently.

### Brief Description of Drawings

FIG. 1 illustrates a flow of a method for adjusting a coding scheme in the prior art;
FIG. 2 illustrates a communication system according to an embodiment of the present invention;
FIG. 3 illustrates a flow chart of a method for implementing adjustment of an uplink adaptive coding scheme according to an embodiment of the present invention.

### Preferred Embodiments of the Invention

The core of the present invention is that under a certain wireless quality condition, the coding scheme is fixed as an appropriate coding scheme under the current wireless quality as possible according to the measurement report. The solution provided by the present invention is to collect enough measurement report samples under a fixed wireless quality and a fixed coding scheme, analyze the wireless quality samples collected under the fixed wireless quality (for example, a fixed carrier/interfere C/I), and select an appropriate coding scheme; meanwhile, determine the distribution of the measurement reports under the coding scheme, and make a separately corresponding measurement report table for each coding scheme. Under a certain wireless quality, the PCU in the server will select a corresponding coding scheme according to the measurement report.

The present invention will be described in further detail below with reference to the accompanying drawings and the specific embodiments.

FIG. 2 illustrates a communication system according to an embodiment of the present invention. As shown in FIG. 2, the communication system of the present embodiment includes: a server 21, a base station 22 and a terminal 23, wherein the server 21 includes a PCU 211. In order that the coding scheme is fixed as the suitable coding scheme under the current wireless quality as possible, the server needs to have the following functions:
the server (specifically the PCU) firstly tests the coding schemes with the highest transmission rate respectively under various fixed wireless qualities;
then it collects measurement reports reported by the base station under various fixed wireless qualities and corresponding coding schemes with the highest transmission rate;
it analyzes the distribution of the collected measurement reports, that is, in detail it analyzes a distribution of a mean bit error rate (MeanBep) value on the uplink and downlink temporary block flow and a change rate of bit error probability (CvBep value) on the uplink and downlink temporary block flow in the collected measurement report samples;
a coding scheme adjustment table is made for the corresponding coding scheme under the various fixed wireless qualities based on an analysis result; specifically, the corresponding coding scheme adjustment table is made by associating an interval of MeanBep value and an interval of CvBep value whose distribution of measurement report samples is larger than a predetermined ratio with the coding scheme with the highest transmission rate, wherein the predetermined ratio is preferably more than 70%; and then the coding scheme adjustment table of the most suitable coding scheme (i.e., the coding scheme with the highest transmission rate) under various fixed wireless qualities is stored.

The coding scheme adjustment table further includes: information of a coding scheme of a upper level of the coding scheme with the highest transmission rate and information of coding schemes of next two lower levels of the coding scheme with the highest transmission rate. For example, a coding scheme adjustment table with the coding scheme being MCS6 further includes the related information of the coding scheme, i.e., MCS7, of higher level of MCS6, and the related information of coding schemes, i.e., MCS4 and MCS5, of next two lower levels of MCS6. However, for the coding scheme MCS9, the highest adjustment is only to MCS9, and the maximum adjustment to lower levels is down to MCS7, therefore, the coding scheme adjusting table of MCS9 further includes the related information of the coding schemes, i.e., MCS7 and MCS8, of next two lower levels of MCS9; for the coding scheme MCS1, it can be adjusted to a coding scheme of MCS3 (such a coding scheme can be adjusted to a one more higher level, which can expedite the speed of upward adjustment; of course, it can be limited only to the MCS-2 according to the previous provisions, which will be more stable), and the downward adjustment is only to MCS1, therefore, the coding scheme adjusting table of MCS1 further includes the related information of the coding schemes, i.e., MCS2 and MCS3, of previous two upper levels of MCS1.

In practical operation, after receiving the measurement reports reported by the base station, the PCU in the server selects a suitable coding scheme in the coding scheme adjustment table corresponding to the current coding scheme according to the measurement reports, and then sends the selected coding scheme to the terminal.

After receiving the issued coding scheme by the server, the terminal sends data to the base station in this coding scheme.

According to the communication system, especially the server, of the present embodiment, each coding scheme corresponds to one coding scheme adjustment table based on the measurement report, and if the current wireless quality is suitable to the coding scheme, then this coding scheme is kept as much as possible, and if a higher-level coding scheme can be adopted under the current wireless quality, then the coding scheme is adjusted to the higher-level coding scheme, thereby fixing the coding scheme on an appropriate coding scheme under the current wireless quality, and further ensuring that the upload rate of the packet service is not affected.

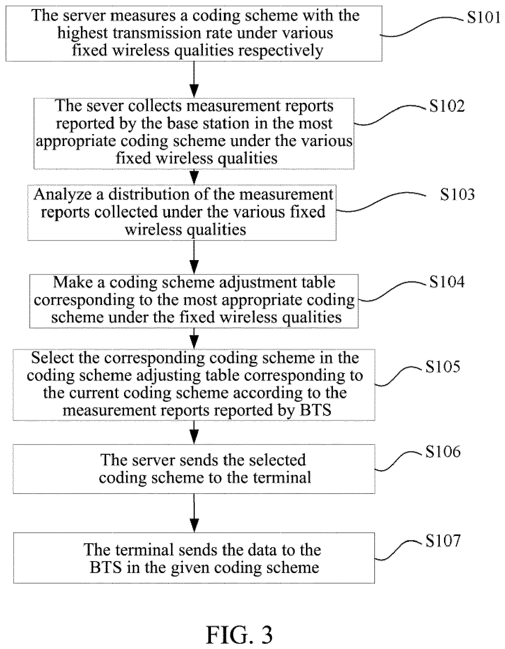

FIG. 3 illustrates a flow chart of a method for implementing adjustment of an uplink adaptive coding scheme according to an embodiment of the present invention. As shown in FIG. 3, the adjusting method of the present embodiment includes the following steps:
S101, a server measures a coding scheme with a highest transmission rate under different wireless qualities respectively.

Firstly, the upload rate of which fixed coding scheme is the highest is measured under a fixed carrier-to-interference ratio, and then the coding scheme with the highest transmission rate under the carrier-to-interference ratio is the most appropriate coding scheme.

For example, when the carrier-to-interference ratio is 15db, the coding scheme of MCS6 has the highest upload rate, and upload rates of MCS7, MCS8, MCS9 and MCS5 are all lower than that of MCS6, accordingly, the coding scheme of MCS6 is the appropriate coding scheme.

For each fixed carrier-to-interference ratio, the most appropriate coding scheme under the fixed carrier-to-interference ratio is selected by testing and comparing the transmission rates of various coding schemes. For example, with the same method, the corresponding coding scheme with the highest transmission rate under each carrier-to-interference ratio of 5db, 10 db, 20 db, 25 db or 30db respectively can be obtained.

S102, the sever collects measurement reports reported by the base station in the most appropriate coding scheme under various fixed wireless qualities, wherein the number of the collected measurement report samples is suitably more than 3000.

S103, analyze the distribution of the measurement reports collected under various fixed wireless qualities;
specifically, distribution of the values of MeanBep values and CvBep values of the collected measurement report samples is analyzed, wherein several values having the highest ratio are specifically taken, for example, the ratio of the measurement report samples, where the MeanBep values are in intervals of 0 to 7, 8 to 13 and 14 to 21, to all the measurement report samples is calculated. It is recommended that the ratio of more than 70% is the most suitable. For example, in the case that the carrier-to-interference ratio is 15db, the transmission rate of MCS6 is the highest, and the ratio of measurement reports reported under this coding scheme where the MeanBep values are from 10 to 22 and the CvBep are from 0 to 7 is up to 80%, then the table corresponding to MCS6 takes MeanBep being from 10 to 22 and CvBep being from 0 to 7 as the coding scheme MCS6; similarly, it can be analyzed that the coding scheme of the MeanBep values being from 23 to 31 and the CvBep values being from 0 to 7 is MCS7; the coding scheme of the MeanBep values being from 0 to 4 and the CvBep values being from 0 to 7 is MCS4; and the coding scheme of the MeanBep values being from 5 to 9 and the value of CvBep being from 0 to 7 is MCS5.

S104, a coding scheme adjustment table corresponding to the most appropriate coding scheme under the fixed wireless qualities is made;
in the present embodiment, each coding scheme only adopts the coding scheme adjustment table (a table similar to Table 3, wherein each coding scheme corresponds to one coding scheme adjustment table) made according to the measurement reports of each coding scheme.

For example, a coding scheme adjustment table corresponding to a coding scheme of MCS6 and a carrier-to-interference ratio of 15db under a fixed wireless quality is made, as shown in FIG. 3. For MCS6, this table can be adjusted up to MCS7 at most and down to MCS4 at most, and the table can also be adjusted down to MCS5. Distribution of the table occupied by MCS6 is filled out according to the distribution condition of MCS6 under a carrier-to-interference ratio of 15db, and a part with higher proportion is taken. This table is filled out in the same format as Table 2, except that the filled coding schemes are mainly the current coding scheme, with upward adjustment to one level at most and downward adjustment to next two levels at most.

**Table 3 Coding Scheme Adjustment Table Corresponding to MCS6**

| | | 8PSK_CV_BEP | | | | | | | |
|---|---|---|---|---|---|---|---|---|---|
| | | 0 | 1 | 2 | 3 | 4 | 5 | 6 | 7 |
| 8 PSK MEAN BEP | 0 | MCS-4 | MCS-4 | MCS-4 | MCS-4 | MCS-4 | MCS-4 | MCS-4 | MCS-4 |
| | 1 | MCS-4 | MCS-4 | MCS-4 | MCS-4 | MCS-4 | MCS-4 | MCS-4 | MCS-4 |
| | 2 | MCS-4 | MCS-4 | MCS-4 | MCS-4 | MCS-4 | MCS-4 | MCS-4 | MCS-4 |
| | 3 | MCS-4 | MCS-4 | MCS-4 | MCS-4 | MCS-4 | MCS-4 | MCS-4 | MCS-4 |
| | 4 | MCS-4 | MCS-4 | MCS-4 | MCS-4 | MCS-4 | MCS-4 | MCS-4 | MCS-4 |
| | 5 | MCS-5 | MCS-5 | MCS-5 | MCS-5 | MCS-5 | MCS-5 | MCS-5 | MCS-5 |
| | 6 | MCS-5 | MCS-5 | MCS-5 | MCS-5 | MCS-5 | MCS-5 | MCS-5 | MCS-5 |
| | 7 | MCS-5 | MCS-5 | MCS-5 | MCS-5 | MCS-5 | MCS-5 | MCS-5 | MCS-5 |
| | 8 | MCS-5 | MCS-5 | MCS-5 | MCS-5 | MCS-5 | MCS-5 | MCS-5 | MCS-5 |
| | 9 | MCS-5 | MCS-5 | MCS-5 | MCS-5 | MCS-5 | MCS-5 | MCS-5 | MCS-5 |
| | 10 | MCS-6 | MCS-6 | MCS-6 | MCS-6 | MCS-6 | MCS-6 | MCS-6 | MCS-6 |
| | 11 | MCS-6 | MCS-6 | MCS-6 | MCS-6 | MCS-6 | MCS-6 | MCS-6 | MCS-6 |
| | 12 | MCS-6 | MCS-6 | MCS-6 | MCS-6 | MCS-6 | MCS-6 | MCS-6 | MCS-6 |
| | 13 | MCS-6 | MCS-6 | MCS-6 | MCS-6 | MCS-6 | MCS-6 | MCS-6 | MCS-6 |
| | 14 | MCS-6 | MCS-6 | MCS-6 | MCS-6 | MCS-6 | MCS-6 | MCS-6 | MCS-6 |
| | 15 | MCS-6 | MCS-6 | MCS-6 | MCS-6 | MCS-6 | MCS-6 | MCS-6 | MCS-6 |
| | 16 | MCS-6 | MCS-6 | MCS-6 | MCS-6 | MCS-6 | MCS-6 | MCS-6 | MCS-6 |
| | 17 | MCS-6 | MCS-6 | MCS-6 | MCS-6 | MCS-6 | MCS-6 | MCS-6 | MCS-6 |
| | 18 | MCS-6 | MCS-6 | MCS-6 | MCS-6 | MCS-6 | MCS-6 | MCS-6 | MCS-6 |
| | 19 | MCS-6 | MCS-6 | MCS-6 | MCS-6 | MCS-6 | MCS-6 | MCS-6 | MCS-6 |
| | 20 | MCS-6 | MCS-6 | MCS-6 | MCS-6 | MCS-6 | MCS-6 | MCS-6 | MCS-6 |
| | 21 | MCS-6 | MCS-6 | MCS-6 | MCS-6 | MCS-6 | MCS-6 | MCS-6 | MCS-6 |
| | 22 | MCS-6 | MCS-6 | MCS-6 | MCS-6 | MCS-6 | MCS-6 | MCS-6 | MCS-6 |
| | 23 | MCS-7 | MCS-7 | MCS-7 | MCS-7 | MCS-7 | MCS-7 | MCS-7 | MCS-7 |
| | 24 | MCS-7 | MCS-7 | MCS-7 | MCS-7 | MCS-7 | MCS-7 | MCS-7 | MCS-7 |
| | 25 | MCS-7 | MCS-7 | MCS-7 | MCS-7 | MCS-7 | MCS-7 | MCS-7 | MCS-7 |
| | 26 | MCS-7 | MCS-7 | MCS-7 | MCS-7 | MCS-7 | MCS-7 | MCS-7 | MCS-7 |
| | 27 | MCS-7 | MCS-7 | MCS-7 | MCS-7 | MCS-7 | MCS-7 | MCS-7 | MCS-7 |
| | 28 | MCS-7 | MCS-7 | MCS-7 | MCS-7 | MCS-7 | MCS-7 | MCS-7 | MCS-7 |
| | 29 | MCS-7 | MCS-7 | MCS-7 | MCS-7 | MCS-7 | MCS-7 | MCS-7 | MCS-7 |
| | 30 | MCS-7 | MCS-7 | MCS-7 | MCS-7 | MCS-7 | MCS-7 | MCS-7 | MCS-7 |
| | 31 | MCS-7 | MCS-7 | MCS-7 | MCS-7 | MCS-7 | MCS-7 | MCS-7 | MCS-7 |

For the coding scheme with the highest transmission rate under each carrier-to-interference ratio, a coding scheme adjustment table similar to Table 2 is made for each coding scheme according to the distribution of measurement reports obtained through testing.

S105, in the practical operation, the server selects the corresponding coding scheme in the coding scheme adjustment table corresponding to the current coding scheme according to the measurement reports reported by the BTS.

For example, in the case where the current coding scheme is MCS6, when the MeanBep values of the measurement report are from 21 to 31 and the CvBep are from 0 to 7, it means that the coding scheme higher than MCS6 is more suitable to the current wireless quality, therefore, MCS6 should be adjusted upwardly. However, in order to prevent the adjustment of the coding scheme from being too fast, the coding scheme is selected as MCS7 according to the coding scheme corresponding to the MeanBep values of 21 to 31 and CvBep values of 0 to 7 in the coding scheme adjustment table corresponding to MCS6. While, in the case where the current coding scheme is MCS6, when the MeanBep values is from 0 to 4 and the CvBep values is from 0 to 7 in the measurement report, then the coding scheme is taken as MCS4, and when the MeanBep values is from 5 to 9 and the CvBep values is from 0 to 7 in the measurement report, then the coding scheme is taken as MCS5; similarly, it is also intended to prevent downward adjustment of the coding scheme from being too fast, since rate reduction will be caused if a too low coding scheme is selected. Similarly, the same method is also applied to other coding schemes.

For the coding scheme of MCS9, it can be upwardly adjusted to MCS9 at most and downwardly to MCS7 at most.

For the coding scheme MCS1, it can be upwardly adjusted to MCS3 at most, that is, such a coding scheme of MCS1 can be adjusted to a one more higher level, which can expedite the speed of upward adjustment; of course, it can be adjusted only to the MCS-2 limited by the previous provisions, which will be more stable; and the lowest can only be adjusted to MCS1.

S106, the server sends the selected coding scheme to a terminal, for example, a mobile phone.

S107, the terminal sends the data to the BTS in the given coding scheme.

According to the method for implementing adjustment of an uplink adaptive coding scheme of the present embodiment, each coding scheme corresponds to one coding scheme adjustment table based on the measurement reports; and if the current wireless quality is suitable to the coding scheme, then this coding scheme is kept as much as possible, and if a higher-level coding scheme can be adopted under the current wireless quality, then the coding scheme is adjusted to the higher-level coding scheme; thereby it can be realized that the coding scheme is fixed as an appropriate coding scheme under the current wireless quality as possible, then further ensuring that the upload rate of the packet service is not affected.

The above embodiments are only preferred embodiments of the present invention, and are not intended to limit the present invention. For a person having ordinary skill in the art, the present invention can have various modifications and variations, which fall under the scope of the appended claims.

### Industrial Applicability

The present invention provides a method for implementing adjustment of an uplink adaptive coding scheme, a communication system and a server, wherein each coding scheme corresponds to one coding scheme adjustment table based on the measurement reports; and if the current wireless quality is suitable to the coding scheme, then this coding scheme is kept as much as possible, and if a higher-level coding scheme can be adopted under the current wireless quality, then the coding scheme is adjusted to the higher-level coding scheme; thereby it can be realized that the coding scheme is fixed as an appropriate coding scheme under the current wireless quality as possible, then further ensuring that the upload rate of the packet service is not affected.

## Claims

1. A method for implementing adjustment of an uplink adaptive coding scheme, the method comprising the following steps of:
a server measuring (S101) a coding scheme with a highest transmission rate under different wireless qualities respectively; collecting (S102) measurement report samples reported by a base station under the different wireless qualities and corresponding coding schemes with the highest transmission rate; analyzing (S103) a distribution of the measurement report samples, and making (S104) a corresponding coding scheme adjustment table for the corresponding coding scheme with the highest transmission rate under the different wireless qualities respectively based on an analysis result; and
when receiving the measurement report reported by the base station, selecting (S105) an appropriate coding scheme in the coding scheme adjustment table corresponding to a current coding scheme based on the measurement report, and then sending (S106) the selected coding scheme to a terminal; wherein each coding scheme adjustment table concerns most appropriate coding schemes with respect to a fixed wireless quality;
wherein, said step of analyzing a distribution of the measurement report samples comprises:
analyzing a distribution of a mean bit error rate, MeanBep, value on an uplink and downlink temporary block flow and a change rate of bit error probability, CvBep, value on an uplink and downlink temporary block flow in the collected measurement report sample;
wherein, said step of making a corresponding coding scheme adjustment table for the corresponding coding scheme with the highest transmission rate under the different wireless qualities respectively based on an analysis result comprises:
making the corresponding coding scheme adjustment table by associating an interval of the MeanBep values and an interval of the CvBep values whose distribution of the measurement report samples is larger than a predetermined ratio with the coding scheme with the highest transmission rate.

2. The method according to claim 1, wherein,
the coding scheme adjustment table further comprises: information of an upper level of coding scheme of the coding scheme with the highest transmission rate and information of next two lower levels of coding schemes of the coding scheme with the highest transmission rate.

3. The method according to claim 1, wherein,
the predetermined ratio is more than 70%.

4. The method according to any one of claims 1 to 3, wherein, said step of collecting measurement report samples reported by a base station comprises:
collecting more than 3000 measurement report samples reported by the base station.

5. A server, comprising a packet control unit (211), wherein the packet control unit (211) comprises:
a table making sub-unit, configured to measure a coding scheme with a highest transmission rate under different wireless qualities respectively, collect measurement report samples reported by a base station under the different wireless qualities and corresponding coding schemes with the highest transmission rate, analyze a distribution of the measurement report samples, and make a corresponding coding scheme adjustment table for the corresponding coding scheme with the highest transmission rate under the different wireless qualities respectively based on an analysis result; and
a selecting sub-unit, configured to select an appropriate coding scheme in the coding scheme adjustment table corresponding to a current coding scheme based on the measurement report when receiving the measurement report reported by the base station, and then send the selected coding scheme to a terminal; wherein each coding scheme adjustment table concerns most appropriate coding schemes with respect to a fixed wireless quality;
wherein,
the table making sub-unit is configured to analyze a distribution of a mean bit error rate, MeanBep, value on an uplink and downlink temporary block flow and a change rate of bit error probability, CvBep, value on an uplink and downlink temporary block flow in the collected measurement report sample;
wherein,
the table making sub-unit is configured to make the corresponding coding scheme adjustment table by associating an interval of the MeanBep values and an interval of the CvBep values whose distribution of the measurement report samples is larger than a predetermined ratio with the coding scheme with the highest transmission rate.

6. The server according to claim 5, wherein,
the coding scheme adjustment table further comprises: information of an upper level of coding scheme of the coding scheme with the highest transmission rate and information of next two lower levels of coding schemes of the coding scheme with the highest transmission rate.

7. A communication system, comprising a base station, a terminal and a server according to claim 5, wherein,
the terminal is configured to send data to the base station according to the coding scheme after receiving the coding scheme issued by the server.

8. The communication system according to claim 7, wherein,
the coding scheme adjustment table further comprises: information of an upper level of coding scheme of the coding scheme with the highest transmission rate and information of next two lower levels of coding schemes of the coding scheme with the highest transmission rate.

## Patentansprüche

1. Verfahren zum Implementieren der Anpassung eines adaptiven Aufwärtsverbindungs-Codierungsschemas, das Verfahren umfassend die folgenden Schritte des:
durch einen Server, Messens (S101) eines Codierungsschemas mit einer höchsten Übertragungsrate unter jeweils verschiedenen Drahtlosqualitäten; Erfassens (S102) von Messberichtsproben, welche von einer Basisstation unter den verschiedenen Drahtlosqualitäten und entsprechenden Codierungsschemas mit der höchsten Übertragungsrate gemeldet werden; Analysierens (S103) einer Verteilung der Messberichtsproben und Erstellens (S104) einer entsprechenden Codierungsschemaanpassungstabelle für das entsprechende Codierungsschema mit der höchsten Übertragungsrate unter den verschiedenen Drahtlosqualitäten jeweils auf Basis eines Analyseergebnisses; und
beim Empfangen des von der Basisstation gemeldeten Messberichts, Auswählens (S105) eines geeigneten Codierungsschemas in der Codierungsschemaanpassungstabelle entsprechend einem aktuellen Codierungsschema auf Basis des Messberichts, und dann Sendens (S106) des ausgewählten Codierungsschemas an ein Endgerät; wobei jede Codierungsschemaanpassungstabelle am besten geeignete Codierungsschemas in Bezug auf eine fixierte Drahtlosqualität betrifft;
wobei der Schritt des Analysierens einer Verteilung der Messberichtsproben umfasst:
Analysieren einer Verteilung eines Werts einer mittleren Bitfehlerrate, MeanBep, in einem temporären Aufwärtsverbindungs- und Abwärtsverbindungs-Blockfluss und eines Werts einer Änderungsrate einer Bitfehlerwahrscheinlichkeit, CvBep, in einem temporären Aufwärtsverbindungs- und Abwärtsverbindungs-Blockfluss in der erfassten Messberichtsprobe;
wobei der Schritt des Erstellens einer entsprechenden Codierungsschemaanpassungstabelle für das entsprechende Codierungsschema mit der höchsten Übertragungsrate unter den verschiedenen Drahtlosqualitäten jeweils auf Basis eines Analyseergebnisses umfasst:
Erstellen der entsprechenden Codierungsschemaanpassungstabelle mittels Verknüpfen eines Intervalls der MeanBep-Werte und eines Intervalls der CvBep-Werte, deren Verteilung der Messberichtsproben größer ist als ein vorbestimmtes Verhältnis, mit dem Codierungsschema mit der höchsten Übertragungsrate.

2. Verfahren nach Anspruch 1, wobei
die Codierungsschemaanpassungstabelle weiter umfasst: Informationen über eine obere Stufe von Codierungsschema des Codierungsschemas mit der höchsten Übertragungsrate und Informationen über nächste zwei Stufen von Codierungsschemas des Codierungsschemas mit der höchsten Übertragungsrate.

3. Verfahren nach Anspruch 1, wobei
das vorbestimmte Verhältnis mehr als 70 % beträgt.

4. Verfahren nach einem der Ansprüche 1 bis 3, wobei der Schritt des Erfassens von Messberichtsproben, welche von einer Basisstation gemeldet werden, umfasst:
Erfassen von mehr als 3000 Messberichtsproben, welche von der Basisstation gemeldet werden.

5. Server, umfassend eine Paketsteuerungseinheit (211), wobei die Paketsteuerungseinheit (211) umfasst:
eine Tabellenerstellungsuntereinheit, welche konfiguriert ist, ein Codierungsschema mit einer höchsten Übertragungsrate unter jeweils verschiedenen Drahtlosqualitäten zu messen, Messberichtsproben, welche von einer Basisstation unter den verschiedenen Drahtlosqualitäten gemeldet werden, und entsprechende Codierungsschemas mit der höchsten Übertragungsrate zu erfassen, eine Verteilung der Messberichtsproben zu analysieren und eine entsprechende Codierungsschemaanpassungstabelle für das entsprechende Codierungsschema mit der höchsten Übertragungsrate unter den verschiedenen Drahtlosqualitäten jeweils auf Basis eines Analyseergebnisses zu erstellen; und
eine Auswahluntereinheit, welche konfiguriert ist, ein geeignetes Codierungsschema in der Codierungsschemaanpassungstabelle entsprechend einem aktuellen Codierungsschema auf Basis des Messberichts auszuwählen, wenn der von der Basisstation gemeldete Messbericht empfangen wird, und dann das ausgewählte Codierungsschema an ein Endgerät zu senden; wobei jede Codierungsschemaanpassungstabelle am besten geeignete Codierungsschemas in Bezug auf eine fixierte Drahtlosqualität betrifft;
wobei
die Tabellenerstellungsuntereinheit konfiguriert ist, eine Verteilung eines Werts einer mittleren Bitfehlerrate, MeanBep, in einem temporären Aufwärtsverbindungs- und Abwärtsverbindungs-Blockfluss und eines Werts einer Änderungsrate einer Bitfehlerwahrscheinlichkeit, CvBep in einem temporären Aufwärtsverbindungs- und Abwärtsverbindungs-Blockfluss in der erfassten Messberichtsprobe zu analysieren;
wobei
die Tabellenerstellungsuntereinheit konfiguriert ist, die entsprechende Codierungsschemaanpassungstabelle mittels Verknüpfen eines Intervalls der MeanBep-Werte und eines Intervalls der CvBep-Werte, deren Verteilung der Messberichtsproben größer ist als ein vorbestimmtes Verhältnis, mit dem Codierungsschema mit der höchsten Übertragungsrate zu erstellen.

6. Server nach Anspruch 5, wobei
die Codierungsschemaanpassungstabelle weiter umfasst: Informationen über eine obere Stufe von Codierungsschema des Codierungsschemas mit der höchsten Übertragungsrate und Informationen über nächste zwei Stufen von Codierungsschemas des Codierungsschemas mit der höchsten Übertragungsrate.

7. Kommunikationssystem, umfassend eine Basisstation, ein Endgerät und einen Server nach Anspruch 5, wobei
das Endgerät konfiguriert ist, nach Empfangen des von dem Server ausgegebenen Codierungsschemas, Daten entsprechend dem Codierungsschema an die Basisstation zu senden.

8. Kommunikationssystem nach Anspruch 7, wobei
die Codierungsschemaanpassungstabelle weiter umfasst: Informationen über eine obere Stufe von Codierungsschema des Codierungsschemas mit der höchsten Übertragungsrate und Informationen über nächste zwei Stufen von Codierungsschemas des Codierungsschemas mit der höchsten Übertragungsrate.

## Revendications

1. Procédé de mise en oeuvre d'un réglage d'un schéma de codage adaptatif de liaison montante, le procédé comprenant les étapes suivantes :
par un serveur, la mesure (S101) d'un schéma de codage avec un débit de transmission le plus élevé respectivement en présence de qualités sans fil différentes ; la collecte (S102) d'échantillons de rapport de mesure rapportés par une station de base en présence des qualités sans fil différentes et de schémas de codage correspondants avec le débit de transmission le plus élevé ; l'analyse (S103) d'une distribution des échantillons de rapport de mesure, et la réalisation (S104) d'une table de réglage de schéma de codage correspondante pour le schéma de codage correspondant avec le débit de transmission le plus élevé respectivement en présence des qualités sans fil différentes sur la base d'un résultat d'analyse ; et
lors de la réception du rapport de mesure rapporté par la station de base, la sélection (S105) d'un schéma de codage approprié dans la table de réglage de schéma de codage correspondant à un schéma de codage actuel sur la base du rapport de mesure, et ensuite l'envoi (S106) du schéma de codage sélectionné à un terminal ; dans lequel chaque table de réglage de schéma de codage concerne des schémas de codage les plus appropriés par rapport à une quantité sans fil fixe ;
dans lequel ladite étape d'analyse d'une distribution des échantillons de rapport de mesure comprend :
l'analyse d'une distribution d'une valeur de taux moyen d'erreur sur les bits, MeanBep, sur un flux de blocs temporaire de liaison montante et de liaison descendante et d'une valeur de taux de changement de probabilité d'erreur sur les bits, CvBep, sur un flux de blocs temporaire de liaison montante et de liaison descendante dans l'échantillon de rapport de mesure collecté ;
dans lequel ladite étape de réalisation d'une table de réglage de schéma de codage correspondante pour le schéma de codage correspondant avec le débit de transmission le plus élevé respectivement en présence des qualités sans fil différentes sur la base d'un résultat d'analyse comprend :
la réalisation de la table de réglage de schéma de codage correspondante en associant un intervalle des valeurs MeanBep et un intervalle des valeurs CvBep dont une distribution des échantillons de rapport de mesure est supérieure à un rapport prédéterminé avec le schéma de codage avec le débit de transmission le plus élevé.

2. Procédé selon la revendication 1, dans lequel
la table de réglage de schéma de codage comprend en outre : des informations d'un niveau supérieur de schéma de codage du schéma de codage avec le débit de transmission le plus élevé et des informations de deux niveaux inférieurs de schémas de codage suivants du schéma de codage avec le débit de transmission le plus élevé.

3. Procédé selon la revendication 1, dans lequel
le rapport prédéterminé est supérieur à 70 %.

4. Procédé selon l'une quelconque des revendications 1 à 3, dans lequel ladite étape de collecte d'échantillons de rapport de mesure rapportés par une station de base comprend :
la collecte de plus de 3000 échantillons de rapport de mesure rapportés par la station de base.

5. Serveur, comprenant une unité de commande de paquets (211), dans lequel l'unité de commande de paquets (211) comprend :
une sous-unité de réalisation de table configurée pour mesurer un schéma de codage avec un débit de transmission le plus élevé respectivement en présence de qualités sans fil différentes, collecter des échantillons de rapport de mesure rapportés par une station de base en présence des qualités sans fil différentes et de schémas de codage correspondants avec le débit de transmission le plus élevé, analyser une distribution des échantillons de rapport de mesure, et réaliser une table de réglage de schéma de codage correspondante pour le schéma de codage correspondant avec le débit de transmission le plus élevé respectivement en présence des qualités sans fil différentes sur la base d'un résultat d'analyse ; et
une sous-unité de sélection configurée pour sélectionner un schéma de codage approprié dans la table de réglage de schéma de codage correspondant à un schéma de codage actuel sur la base du rapport de mesure lors de la réception du rapport de mesure rapporté par la station de base, et ensuite envoyer le schéma de codage sélectionné à un terminal ; dans lequel chaque table de réglage de schéma de codage concerne des schémas de codage les plus appropriés par rapport à une quantité sans fil fixe ;
dans lequel
la sous-unité de réalisation de table est configurée pour analyser une distribution d'une valeur de taux moyen d'erreur sur les bits, MeanBep, sur un flux de blocs temporaire de liaison montante et de liaison descendante et d'une valeur de taux de changement de probabilité d'erreur sur les bits, CvBep, sur un flux de blocs temporaire de liaison montante et de liaison descendante dans l'échantillon de rapport de mesure collecté ;
dans lequel
la sous-unité de réalisation de table est configurée pour réaliser la table de réglage de schéma de codage correspondante en associant un intervalle des valeurs MeanBep et un intervalle des valeurs CvBep dont une distribution des échantillons de rapport de mesure est supérieure à un rapport prédéterminé avec le schéma de codage avec le débit de transmission le plus élevé.

6. Serveur selon la revendication 5, dans lequel
la table de réglage de schéma de codage comprend en outre : des informations d'un niveau supérieur de schéma de codage du schéma de codage avec le débit de transmission le plus élevé et des informations de deux niveaux inférieurs de schémas de codage suivants du schéma de codage avec le débit de transmission le plus élevé.

7. Système de communication comprenant une station de base, un terminal et un serveur selon la revendication 5, dans lequel
le terminal est configuré pour envoyer des données à la station de base en fonction du schéma de codage après la réception du schéma de codage émis par le serveur.

8. Système de communication selon la revendication 7, dans lequel
la table de réglage de schéma de codage comprend en outre : des informations d'un niveau supérieur de schéma de codage du schéma de codage avec le débit de transmission le plus élevé et des informations de deux niveaux inférieurs de schémas de codage suivants du schéma de codage avec le débit de transmission le plus élevé.
